# EUROPEAN PATENT SPECIFICATION

(11) **EP 4 093 817 B1**
(45) Date of publication and mention of the grant of the patent: **10.04.2024**
(21) Application number: 21705052.5
(22) Date of filing: 20.01.2021
(51) Int. Cl.: C08K 9/02, C08K 9/10, C08L 67/02, C08L 23/10

(54) **POLYMER COMPOSITE WITH LOW DIELECTRIC CONSTANT**
POLYMERVERBUNDWERKSTOFF MIT NIEDRIGER DIELEKTRISCHER KONSTANTE
COMPOSITE POLYMÈRE AYANT UNE CONSTANTE DIÉLECTRIQUE FAIBLE

(30) Priority: 20.01.2020 CN 202010062516
(43) Date of publication of application: 30.11.2022
(73) Proprietor: DUPONT POLYMERS, INC., Wilmington DE 19805 (US)
(72) Inventor: CHEN, Jianying, Shanghai 2000125 (CN); WANG, Ting, Shanghai 201203 (CN)
(74) Representative: Marks & Clerk LLP
(86) International application number: PCT/US2021/014082
(87) International publication number: WO 2021/150544

(56) References cited:
- EP-A1- 3 546 509
- CN-A- 110 698 859
- US-A1- 2020 010 674
- BHARATH R. SUNDARARAM ET AL: "Synthesis and evaluation of PVDF-MgTiO 3 polymer-ceramic composites for low- k dielectric applications", JOURNAL OF MATERIALS CHEMISTRY C, vol. 7, no. 15, 11 April 2019 (2019-04-11) , pages 4484-4496, XP055789502, GB ISSN: 2050-7526, DOI: 10.1039/C8TC04663H
- HE DALONG ET AL: "Core-shell structured BaTiO3@Al2O3nanoparticles in polymer composites for dielectric loss suppression and breakdown strength enhancement", COMPOSITES PART A: APPLIED SCIENCE AND MANUFACTURING, ELSEVIER, AMSTERDAM, NL, vol. 93, 23 November 2016 (2016-11-23), pages 137-143, XP029875652, ISSN: 1359-835X, DOI: 10.1016/J.COMPOSITESA.2016.11.025
- YUAN Y ET AL: "MgTiO3filled PTFE composites for microwave substrate applications", MATERIALS CHEMISTRY AND PHYSICS, ELSEVIER SA, SWITZERLAND, TAIWAN, REPUBLIC OF CHINA, vol. 141, no. 1, 3 June 2013 (2013-06-03), pages 175-179, XP028576705, ISSN: 0254-0584, DOI: 10.1016/J.MATCHEMPHYS.2013.04.043
- SHIH W-H ET AL: "Silica coating on barium titanate particles", MATERIALS LETTERS, ELSEVIER, AMSTERDAM, NL, vol. 24, no. 1-3, 1 June 1995 (1995-06-01) , pages 13-15, XP004067080, ISSN: 0167-577X, DOI: 10.1016/0167-577X(95)00061-5

## Description

### FIELD OF DISCLOSURE

This invention relates to thermoplastic compositions with low dielectric constant and good mechanical properties.

### BACKGROUND

Thermoplastic polymers possess excellent mechanical properties, moldability, and chemical resistance. In the electronic industry, high loading of inorganic fillers are incorporated into thermoplastic polymers to achieve composites with low dielectric constant (Dk) for use as housing or supporting materials. BHARATH R. SUNDARARAM ET AL,JOURNAL OF MATERIALS CHEMISTRY C, vol. 7, no. 15, pages 4484-4496,discloses PVDF-MgTiO₃ polymer-ceramic composites for low- k dielectric applications. However, high loading of inorganic fillers also causes decrease in mechanical properties. Thus, there is still a need to develop composite thermoplastic compositions with low Dk, while maintaining good mechanical properties.

### SUMMARY

Provided herein are polymer compositions with low dielectric constant, which comprise, a) at least one thermoplastic polymer; and b) about 5-95 wt% of core/shell particles, wherein the core/shell particles comprise a core formed of MgTiOs and a shell formed of SiO₂, and wherein the weight ratio of MgTiO₃:SiO₂ ranges from 85:15-15:85; with the total weight of the polymer composition totaling to 100 wt%.

In one embodiment of the polymer composition, the at least one thermoplastic polymer is comprised at a level of 10-80 wt%, based on the total weight of the polymer composition.

In a further embodiment of the polymer composition, the at least one thermoplastic polymer is comprised at a level of 20-60 wt%, based on the total weight of the polymer composition.

In a yet further embodiment of the polymer composition, the at least one thermoplastic polymer is comprised at a level of 25-45 wt%, based on the total weight of the polymer composition.

In a yet further embodiment of the polymer composition, the at least one thermoplastic polymer is selected from the group consisting of polyesters, polyolefins, polyimides, polyamides, polyether imide, polyaryletheretherketone, polyoxymethylenes, and combinations of two or more thereof.

In a yet further embodiment of the polymer composition, the core/shell particles have a weight ratio of MgTiO₃:SiO₂ ranging from 80:20-20:80

In a yet further embodiment of the polymer composition, the core/shell particles have a weight ratio of MgTiO₃:SiO₂ ranging from 75:25-25:75

In a yet further embodiment of the polymer composition, the core/shell particles are comprised at a level of 25-85 wt% or 45-75 wt% based on the total weight of the polymer composition.

In a yet further embodiment of the polymer composition, the core/shell particles are comprised at a level of 45-75 wt%, based on the total weight of the polymer composition.

Further provided herein are articles formed of the polymer compositions described above.

### DETAILED DESCRIPTION

Disclosed herein are composite polymer compositions with low dielectric constant and good mechanical properties. The composite polymer compositions comprise at least one thermoplastic polymer and dispersed therein core/shell particles, wherein the core/shell particles comprise MgTiOs core and SiO₂ shell.

The term "thermoplastic polymer" is used herein referring to polymers that turn to a liquid when heated and freeze to a rigid state when cooled sufficiently. Thermoplastic polymers useful herein include, without limitation, polyesters, polyolefins, polyimides, polyamides, polyether imide, polyaryletheretherketone, polyoxymethylenes, and mixtures thereof. Exemplary polyesters include, without limitation, polyethylene terephthalate (PET), polybutylene terephthalate (PBT), polytrimethylene terephthalate (PTT), polycyclohexylene dimethylene terephthalate (PCT), etc. Exemplary polyolefins include, without limitation, polyethylene, polypropylene, polyolefin elastomer, etc. Suitable polyesters may be obtained commercially from various vendors. For example, suitable PET may be obtained from DuPont de Nemours, Inc. (U.S.A.) (hereafter "DuPont") under the trade name Rynite^{®}; suitable PBT may be obtained from DuPont under the trade name Crastin^{®} or from Shinkong Synthetics Fibers Corporation (Taiwan) under the trade name Shinite D201; suitable PTT may be obtained from DuPont under the trade name Sorona^{®}; suitable PCT may be obtained from Celanese Corporation (Switzerland), under the trade name Thermx^{™}. Polyolefins used herein also may be obtained commercially from various vendors. For example, suitable polypropylene may be obtained from ExxonMobil under the trade name ExxonMobil^{™} PP4792E1 or from DOW Corporation (USA) under the trade name DOWLEX^{™}; suitable Polyolefin elastomer may be obtained from DOW Corporation (USA), under the trade name ENGAGE^{™}; suitable ethylene-vinyl acetate copolymer (EVA) maybe obtained from DOW Corporation (USA), under the trade name ELVAX^{™}.

In accordance with the present disclosure, 10-80 wt%, or 20-60 wt%, or about 25-45 wt% of the thermoplastic polymer may be present in the composition, based on the total weight of the composition.

The core/shell particles used herein are comprised of core that is formed of MgTiOs and shell formed of SiO₂. In accordance with the present disclosure, the MgTiOs core are completely or partially coated with SiO₂ shell. And the weight ratio of MgTiO₃:SiO₂ ranges from 85:15-15:85, or from 80:20-20:80, or from 75:25-25:75.

The core/shell particles used herein may be prepared by a sol-gel process, such as the process disclosed in PCT Patent Application Publication No. WO201531570 The sol-gel process includes mixing in a solvent the MgTiOs particles, a silica precursor, a hydrolysis, and a surfactant (optional and may be cationic surfactant or amphoteric surfactant) to result in a mixture solution. Such mixing results in chemically reacting the silica precursor to form a layer of SiO₂ coating on the surface of the MgTiOs particles. And the core/shell particles may be removed by filtration from the mixture solution.

The solvents used in the sol-gel process are aqueous solution, in which, the MgTiOs particles, silica precursors, hydrolysis, and optional surfactants are uniformly dispersed and reacted. Preferably, the solvents used herein are solvent mixtures of water and any one or more of the following: isopropyl alcohol (IPA), methanol, ethanol, methyl ethyl ketone (MEK), methyl isobutyl ketone (MIBK), propylene glycol monomethyl ether (PGME), propylene glycol monomethyl ether acetate (PGMEA), monoethanolamine (MEA), dipropylene glyol diacrylate (DPGDA), and mixtures of two or more thereof. In one embodiment, the solvent is an aqueous solution of water and one or more of the following: isopropyl alcohol (IPA), methanol, ethanol, methyl ethyl ketone (MEK), methyl isobutyl ketone (MIBK), propylene glycol monomethyl ether (PGME), propylene glycol monomethyl ether acetate (PGMEA), monoethanolamine (MEA), dipropylene glyol diacrylate (DPGDA). In one embodiment, the solvent may be a mixture of water and one or more of the following: isopropyl alcohol (IPA), methanol, and ethanol. When the solvent is an aqueous solution of water and IPA, methanol, or ethanol, the amount of solvent may range from about 300 to 5000 weight parts per 100 weight parts of the MgTiOs particles and the mass ratio between water and IPA, methanol, and/or ethanol ranges from about 1:3 to about 1:10.

The SiO₂ precursor used in the sol-gel process is the source of the SiO₂ shell.

The SiO₂ precursor may be silicon alkoxide represented by formula (I):

(R¹)ₙSi(OR²)₄₋ₙ ,

wherein
R¹ represents hydrocarbons with 1 to 8 identical or different, substituted or unsubstituted carbon atoms, n represents 0, 1, 2, or 3, and R² represents hydrocarbons with 1 to 8 carbon atoms. The silicon alkoxide is reacted with water and the hydrolysis catalyst to create silica, which is the entity that coats the MgTiOs particles.

The silicon alkoxide may be tetraalkoxysilane. Or, the tetraalkoxysilane may be tetraethoxysilane, tetramethoxysilane, tetrapropoxysilane, tetrabutoxysilane, tetraamyloxysilane, tetraoctyloxysilane, tetranonyloxysilane, dimethoxy diethoxy silane, dimethoxy diisopropoxy silane, diethoxy diisopropoxy silane, diethoxy dibutoxy silane, diethoxy ditrityloxy silane, or mixtures of two or more thereof.

When the silicon alkoxide is tetraethoxysilane (TEOS, Si(OC₂H₅)₄)), the hydrolysis reaction is:

Si(OC₂H₅)₄ + 2H₂O → SiO₂ + 4C₂H₅OH

Hydrolysis catalysts promote the hydrolysis reaction of SiO₂ precursors as acidic hydrolysis catalysts or basic hydrolysis catalysts. The methods described herein may use acidic hydrolysis catalysts or basic hydrolysis catalysts. Acidic hydrolysis catalysts are proton (H⁺) donors that promote the hydrolysis reaction through protonation of oxygen atoms, whereas basic hydrolysis catalysts are proton (H⁺) acceptors that promote the reaction by enabling nucleophilic addition through proton transfer from carbon atoms in hydrolysis.

Hydrochloric acid may be preferable as an acidic hydrolysis and ammonium hydroxide may be preferable as a basic hydrolysis catalyst.

Surfactants are optionally included in the sol-gel process. The surfactants used herein may be cationic surfactants with hydrophilic groups that dissociate in aqueous solution into cations or amphoteric surfactants that dissociate in aqueous solution into both anions and cations. The surfactants are used in the process as binders of the MgTiOs particles and the silica.

In accordance with the present disclosure, 5-95 wt%, or 25-85 wt%, or 45-75 wt% of the core/shell particles may be present in the composition, based on the total weight of the composition.

The polymer compositions disclosed herein may further comprise other additives, such as colorants, antioxidants, UV stabilizers, UV absorbers, heat stabilizers, lubricants, viscosity modifiers, nucleating agents, plasticizers, mold release agents, scratch and mar modifiers, impact modifiers, emulsifiers, optical brighteners, antistatic agents, acid adsorbents, smell adsorbents, anti-hydrolysis agents, anti-bacterial agents, density modifiers, reinforcing fillers, thermal conductive fillers, electrical conductive fillers, coupling agents, endcapping reagents and combinations of two or more thereof. Based on the total weight of the polymer composition disclosed herein, such additional additive(s) may be present at a level of about 0.005-30 wt% or about 0.01-25 wt%, or about 0.02-20 wt%.

Further disclosed herein are articles formed of the polymeric compositions disclosed herein. Such polymeric compositions can be used in various areas, including, for example, electronic, automobile, and communication industries. Exemplary articles formed of the polymeric composition, include, without limitation, housing, protective, or supporting components in electronic devices.

### EXAMPLES

### Materials

- PP - polypropylene obtained from ExxonMobil Corporation under the trade name ExxonMobil^{™} PP4792E1;
- PBT - polybutylene terephthalate obtained from Shinkong Synthetic Fibers Corporation under the trade name Shinite^{™} D201 ;
- MgTiO₃ - MgTiOs powder obtained from Shanghai Dian Yang Industry Co. Ltd (China);
- SiO₂ - SiO₂ powders obtained from Lianyungang Donghai Silica Powder Co., Ltd;
- C/S (97/3) - core/shell particles prepared as follows: dispersing TEOS and deionized water in a solvent by stirring; adding MgTiO³ particles into the dispersion; continuing stirring until the dispersion thickened; drying the thickened gel product at 70°C for 24 hours to obtain the core/shell particles
- C/S (90/10) - core/shell particles prepared as above, with a weight ratio between MgTiOs and SiO₂ at 90:10;
- C/S (70/30) - core/shell particles prepared as above, with a weight ratio between MgTiOs and SiO₂ at 70:30;
- C/S (50/50) - core/shell particles prepared as above, with a weight ratio between MgTiOs and SiO₂ at 50:50.

In each of comparative examples CE1-CE6 and examples E1-E4, a polymer composition (all components listed in Table 1) was prepared by compounding in an extruder. The barrel temperatures were set at about 220°C and screw speed at about 300 rpm. After exiting the extruder, the blended compositions were cooled and cut into resin pellets, which was followed by drying overnight.

The dried resin pellets obtained in each example were injection molded into 60x60x1 mm test plaques, and the dielectric constant (Dk) value was measured and tabulated in Table 1.

Further, for each sample, the tensile stress and tensile strain at break were measured in accordance with ISO 527-2:2012; the flexure stress was measured in accordance with ISO 178; and the UN charpy impact was measured in accordance with ISO 179-1. Results are tabulated in Table 1.

As demonstrated herein, when core/shell particles with a weight ratio of MgTiO₃:SiO₂ between 85:15-15:85 was incorporated in thermoplastic polymers (e.g., E1-E4), the dielectric constant (Dk) value was decreased to 3 compared to those compositions using MgTiOs particles or core/shell particles with a weight ratio of MgTiO₃:SiO₂ less than 15:85. Moreover, although the dielectric constant (Dk) value of 3 was achieved when SiO₂ powder was used, the mechanical properties of the composition was poor compared to the examples.

**Table 1**

| | CE1 | E1 | CE2 | CE3 | E2 | E3 | E4 | CE4 | CE5 | CE6 |
|---|---|---|---|---|---|---|---|---|---|---|
| Compositions | | | | | | | | | | |
| PP (wt%) | - | - | 30 | 30 | 30 | 30 | 30 | 30 | 30 | 30 |
| PBT (wt%) | 30 | 30 | - | - | - | - | - | - | - | - |
| MgTiO₃ (wt%) | 70 | - | - | - | - | - | - | 70 | - | 49 |
| SiO₂ (wt%) | - | - | - | - | - | - | - | - | 70 | 21 |
| C/S (97/3) (wt%) | - | - | 70 | - | - | - | - | - | - | - |
| C/S (90/10) (wt%) | - | - | - | 70 | - | - | - | - | - | - |
| C/S (70/30) (wt%) | - | - | - | - | 70 | - | - | - | - | - |
| C/S (50/50) (wt%) | - | - | - | - | - | 70 | - | - | - | - |
| C/S (30/70) (wt%) | - | 70 | - | - | - | - | 70 | - | - | - |

| Properties | | | | | | | | | | |
|---|---|---|---|---|---|---|---|---|---|---|
| Dk (at 2.45 GHz) | 6 | 3 | 4 | 4 | 3 | 3 | 3 | 5 | 3 | 4 |
| Tensile Stress (MPa) | N/D* | N/D* | N/D* | N/D* | N/D* | N/D* | 29 | 20 | 25 | 22 |
| Tensile strain at break (%) | N/D* | N/D* | N/D* | N/D* | N/D* | N/D* | 1.7 | 1.3 | 0.8 | 0.6 |
| Flexure stress (MPa) | ND* | N/D* | N/D* | N/D* | N/D* | N/D* | 50 | 39 | 45 | 34 |
| UN-charpy impact (KJ/m²) | ND* | N/D* | N/D* | N/D* | N/D* | N/D* | 11.29 | 9.67 | 8.97 | 7.49 |

| | | | | | | | | | | |
|---|---|---|---|---|---|---|---|---|---|---|
| *N/D: not determined. | | | | | | | | | | |

## Claims

1. A polymer composition with low dielectric constant, the composition comprising
a) at least one thermoplastic polymer; and
b) 5 to 95 wt% of core/shell particles, wherein the core/shell particles comprise a core formed of MgTiOs and a shell formed of SiO₂, and wherein the weight ratio of MgTiO₃:SiO₂ ranges from 85:15 to 15:85;
with the total weight of the polymer composition totaling to 100 wt%.

2. The polymer composition of Claim 1, wherein, the at least one thermoplastic polymer is comprised at a level of 10 to 80 wt%, based on the total weight of the polymer composition.

3. The polymer composition of Claim 2, wherein, the at least one thermoplastic polymer is comprised at a level of 20 to 60 wt%, based on the total weight of the polymer composition.

4. The polymer composition of Claim 3, wherein, the at least one thermoplastic polymer is comprised at a level of 25 to 45 wt%, based on the total weight of the polymer composition.

5. The polymer composition of any one of Claims 1 to 4, wherein the at least one thermoplastic polymer is selected from the group consisting of polyesters, polyolefins, polyimides, polyamides, polyether imides, polyaryletheretherketones, polyoxymethylenes, and combinations of two or more thereof.

6. The polymer composition of any one of Claims 1 to 5, wherein the core/shell particles have a weight ratio of MgTiO₃:SiO₂ ranging from 80:20 to 20:80.

7. The polymer composition of Claim 6, wherein the core/shell particles have a weight ratio of MgTiO₃:SiO₂ ranging from 75:25 to 25:75

8. The polymer composition of any one of Claims 1 to 7, wherein the core/shell particles are comprised at a level of 25 to 85 wt% preferably 45 to 75 wt%, based on the total weight of the polymer composition.

9. The polymer composition of Claim 8, wherein the core/shell particles are comprised at a level of 45 to 75 wt%, based on the total weight of the polymer composition.

10. An article formed of the polymer composition recited in any one of Claims 1 to 9.

## Patentansprüche

1. Polymerzusammensetzung mit niedriger Dielektrizitätskonstante, wobei die Zusammensetzung Folgendes umfasst
a) mindestens ein thermoplastisches Polymer; und
b) 5 bis 95 Gew.-% Kern-Mantel-Partikel, wobei die Kern-Mantel-Partikel einen Kern, der aus MgTiO₃ gebildet ist, und einen Mantel umfassen, der aus SiO₂ gebildet ist, und wobei das Gewichtsverhältnis von MgTiO₃:SiO₂ im Bereich von 85:15 bis 15:85 liegt;
wobei das Gesamtgewicht der Polymerzusammensetzung sich auf insgesamt 100 Gew.-% beläuft.

2. Polymerzusammensetzung nach Anspruch 1, wobei das mindestens eine thermoplastische Polymer in einer Konzentration von 10 bis 80 Gew.-%, auf das Gesamtgewicht der Polymerzusammensetzung bezogen, beinhaltet ist.

3. Polymerzusammensetzung nach Anspruch 2, wobei das mindestens eine thermoplastische Polymer in einer Konzentration von 20 bis 60 Gew.-%, auf das Gesamtgewicht der Polymerzusammensetzung bezogen, beinhaltet ist.

4. Polymerzusammensetzung nach Anspruch 3, wobei das mindestens eine thermoplastische Polymer in einer Konzentration von 25 bis 45 Gew.-%, auf das Gesamtgewicht der Polymerzusammensetzung bezogen, beinhaltet ist.

5. Polymerzusammensetzung nach einem der Ansprüche 1 bis 4, wobei das mindestens eine thermoplastische Polymer aus der Gruppe ausgewählt ist bestehend aus Polyestern, Polyolefinen, Poplyimiden, Polyamiden, Polyetherimiden, Polyaryletheretherketonen, Polyoxymethylenen und Kombinationen von zwei oder mehreren davon.

6. Polymerzusammensetzung nach einem der Ansprüche 1 bis 5, wobei die Kern-Mantel-Partikel ein Gewichtsverhältnis von MgTiO₃:SiO₂ im Bereich von 80:20 bis 20:80 aufweisen.

7. Polymerzusammensetzung nach Anspruch 6, wobei die Kern-Mantel-Partikel ein Gewichtsverhältnis von MgTiO₃:SiO₂ im Bereich von 75:25 bis 25:75 aufweisen.

8. Polymerzusammensetzung nach einem der Ansprüche 1 bis 7, wobei die Kern-Mantel-Partikel in einer Konzentration von 25 bis 85 Gew.-%, bevorzugt 45 bis 75 Gew.-%, auf das Gesamtgewicht der Polymerzusammensetzung bezogen, beinhaltet sind.

9. Polymerzusammensetzung nach Anspruch 8, wobei die Kern-Mantel-Partikel in einer Konzentration von 45 bis 75 Gew.-%, auf das Gesamtgewicht der Polymerzusammensetzung bezogen, beinhaltet sind.

10. Artikel, der aus der Polymerzusammensetzung gebildet ist, die in einem der Ansprüche 1 bis 9 aufgeführt ist.

## Revendications

1. Composition polymère ayant une faible constante diélectrique, la composition comprenant
a) au moins un polymère thermoplastique ; et
b) de 5 à 95 % en pds de particules coeur/écorce, dans laquelle les particules coeur/écorce comprennent un coeur formé de MgTiO₃ et une écorce formée de SiO₂, et dans laquelle le rapport en poids du MgTiO₃:SiO₂ va de 85:15 à 15:85 ;
avec le poids total de la composition polymère totalisant 100 % en pds.

2. Composition polymère selon la revendication 1, dans laquelle l'au moins un polymère thermoplastique est compris à une concentration de 10 à 80 % en pds, sur la base du poids total de la composition polymère.

3. Composition polymère selon la revendication 2, dans laquelle l'au moins un polymère thermoplastique est compris à une concentration de 20 à 60 % en pds, sur la base du poids total de la composition polymère.

4. Composition polymère selon la revendication 3, dans laquelle l'au moins un polymère thermoplastique est compris à une concentration de 25 à 45 % en pds, sur la base du poids total de la composition polymère.

5. Composition polymère selon l'une quelconque des revendications 1 à 4, dans laquelle l'au moins un polymère thermoplastique est sélectionné dans le groupe constitué des polyesters, polyoléfines, polyimides, polyamides, polyéther imides, polyarylétheréthercétones, polyoxyméthylènes, et des combinaisons de deux ou plus de ceux-ci.

6. Composition polymère selon l'une quelconque des revendications 1 à 5, dans laquelle les particules coeur/écorce présentent un rapport en poids de MgTiO₃:SiO₂ allant de 80:20 à 20:80.

7. Composition polymère selon la revendication 6, dans laquelle les particules coeur/écorce présentent un rapport en poids de MgTiO₃:SiO₂ allant de 75:25 à 25:75.

8. Composition polymère selon l'une quelconque des revendications 1 à 7, dans laquelle les particules coeur/écorce sont comprises à une concentration de 25 à 85 % en pds, préférablement de 45 à 75 % en pds, sur la base du poids total de la composition polymère.

9. Composition polymère selon la revendication 8, dans laquelle les particules coeur/écorce sont comprises à une concentration de 45 à 75 % en pds, sur la base du poids total de la composition polymère.

10. Article formé de la composition polymère énoncée selon l'une quelconque des revendications 1 à 9.
